Europäisches Patentamt

European Patent Office

Office européen des brevets

(11) Publication number: **0 004 138**

**A1**

(12) # EUROPEAN PATENT APPLICATION

(21) Application number: **79300239.5**

(22) Date of filing: **16.02.79**

(51) Int. Cl.²: **H 02 K 21/00**
**H 02 K 29/00**

(30) Priority: **23.02.78 GB 725778**

(43) Date of publication of application:
**19.09.79 Bulletin 79/19**

(84) Designated contracting states:
**DE FR GB NL**

(71) Applicant: **Hall, Leslie William**
**19 Bridge Street Clayhanger Brownhills**
**Walsall West Midlands(GB)**

(72) Inventor: **Hall, Leslie William**
**19 Bridge Street Clayhanger Brownhills**
**Walsall West Midlands(GB)**

(74) Representative: **Walters, Frederick James et al,**
**URQUHART-DYKES & Lord St. Martin's House 140**
**Tottenham Court Road**
**London, W1P 0JN(GB)**

(54) **A pulse operated electric motor.**

(57) A pulse operated electric motor comprises a stator (18 and 20), a rotor (28) mounted for rotation with respect to the stator, and at least one magnet mounted on each of the rotor and stator. Either the stator magnet or the rotor magnet comprises two electrically separate coils by which is meant that the coils are not connected to one another. Each coil is connected to a respective pulse generator, and in operation each generator produces pulses of the same polarity as one another and of opposite polarity to the pulses of the other generator. The pulses of one generator alternate with the pulses of the other generator so that the two magnet coils are energised alternately to constitute a stator or rotor magnet which changes polarity each time one of the coils is energised. In a preferred motor having eight stator electromagnets, the magnet coils can be switched from a series configuration to a parallel configuration. The rotor magnets may be arranged in coaxial rings and in operation the rings may be deenergised sequentially starting with the rings of smallest diameter.

Fig.3

- 2 -

## TITLE

"A pulse operated electric motor"

### TECHNICAL FIELD

The present invention relates to a pulse operated electric motor.

In a conventional electric motor, a rotor is rotatably mounted within or adjacent to a stator which is rigidly secured to the main structure of the motor. One or more coils of wire are wound onto the stator to constitute an electro-magnet, and one or more similar electro-magnets or permanent magnets are mounted on the rotor.

In operation, electric current is passed through the electro-magnet in the appropriate direction so that the magnetic interaction between the stator and rotor magnets causes the rotor to rotate thereby driving the motor. With this conventional construction, the motor speed is dependent upon the amplitude of the magnetic interaction between the stator and rotor magnets, which of course is proportional to the amplitude of the current through the stator winding.

If the motor is operated at high speeds, difficulties can arise due to the corresponding high amplitude motor current which is required. It is an aim of the invention to alleviate these difficulties, and accordingly there is provided a pulse operated electric motor comprising a stator, a rotor mounted for rotation with respect to the stator and at least one magnet mounted on each of the rotor and stator, in which either the stator magnet or the rotor magnet comprises either one coil or two electrically separate coils. By "electrically separate" is meant that the coils are not connected to one another.

Each coil is connected to its respective pulse amplifier, and in operation each amplifier is arranged to produce pulses of the same polarity as one another and the generators are connected to their respective coils to produce therein magnetic fields of opposite polarity. The pulses of one amplifier are arranged to alternate with the pulses of the other amplifier so that the two magnet coils are energised alternately to constitute a stator or rotor magnet which changes polarity each time one of the coils is energised. It will be appreciated that the motor speed is proportional to the frequency of the pulses applied to the coils, and consequently the motor speed can be increased without a corresponding increase in the current amplitude in the coils.

One motor of the invention has two rotor magnets mounted $180^{\circ}$ apart and a single stator magnet. These rotor magnets are arranged to be of opposite polarity to one another so that they are sequentially attracted and repelled by the stator magnet to drive the motor. When the motor is running one of the generators can be switched off, and the motor will remain running thereby operating the motor on a "push only" system.

Although the invention is intended to include an electric motor having only one stator magnet, in a preferred embodiment the motor will include at least one pair of diametrically opposed stator magnets. The or each rotor magnet can be either a permanent magnet or an electro-magnet, although a permanent magnet is preferred because it has a greater rigidity which renders it more suitable for operation at high motor speeds. The stator and rotot magnets may be of any suitable configuration, and in two preferred arrangements the rotor magnet is a permanent horseshoe magnet, and the stator magnet is either a bar electro-magnet or a horseshoe electro-magnet.

Embodiments of the invention will now be described by way of example with reference to the accompanying illustrative drawings in which:-

FIGURE 1 is a circuit diagram of a pulse generator and power amplifiers for energising an electric motor of the invention,

FIGURE 2 is a diagrammatic plan view of the stator of one electric motor of the invention showing two electrically separate stator coils,

FIGURE 3 is a diagrammatic end view of an electric motor of the invention showing the arrangement of four rotor magnets and two stator magnets.

FIGURE 4 is a diagrammatic plan view of the assembled stator and rotor of an electric motor of the invention,

FIGURE 5 is a diagrammatic plan view of part of one rotor and stator magnet configuration,

FIGURE 6 is a diagrammatic plan view of another rotor and stator magnet configuration,

FIGURES 7 and 8 are diagrammatic plan views of the rotor of another electric motor of the invention, and

FIGURE 9 is a diagrammatic plan view of the rotor of a further electric motor of the invention.

FIGURE 10 is a diagrammatic plan view of the rotor and stator of a further electric motor of the invention,

FIGURE 11 is a diagrammatic end view of the rotor and stator illustrated in Figure 10,

FIGURE 12 is a diagrammatic illustration of the connection of the stator coils of Figures 10 and 11,

FIGURE 13 is a diagrammatic plan view of the rotor and stator assembly of a further electric motor of the invention,

FIGURE 14 is a circuit diagram of a synchronous starter and pulse generator for the electric motor of Figure 13, and

FIGURE 15 is a diagrammatic end view of the stator layout of the motor of Figure 13.

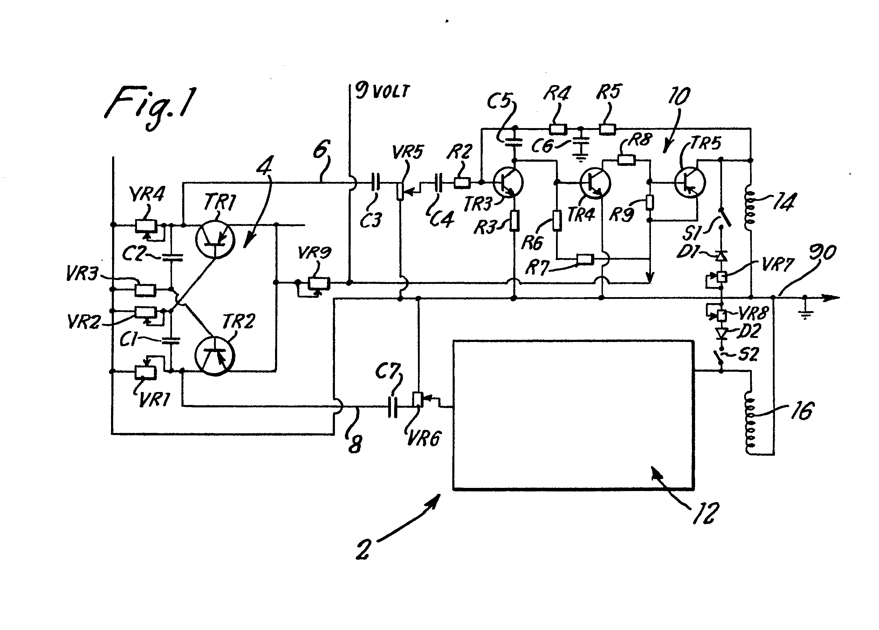

Referring to the drawings, and particularly to Figure 1, each stator magnet of an electric motor of the invention is energised by pulses from a pulse generator 2. This generator includes a multi-vibrator oscillator 4 which generates two independent pulse trains along the lines 6 and 8 which lead from the collector electrodes of two transistors TR1 and TR2. These pulse trains are passed via·capacitors C3 and C7 to their respective power amplifiers 10 and 12. The output pulses of the amplifiers 10 and 12 are fed to their respective stator coils 14 and 16 which will be described hereinafter.

The multi-vibrator operates in such a way that when the transistor TR1 is switched on the transistor TR2 is switched off and vice versa so that the stator coils 14 and 16 are energised alternately by currents of opposite direction. The ———————————————————

frequency of the multi-vibrator oscillator 4 can be varied by suitably adjusting the variable resistors VR1 or VR4.

The multi-vibrator oscillator 4 and the power amplifiers 10 and 12 are of conventional construction and their circuit components are given at the end of this Specification.

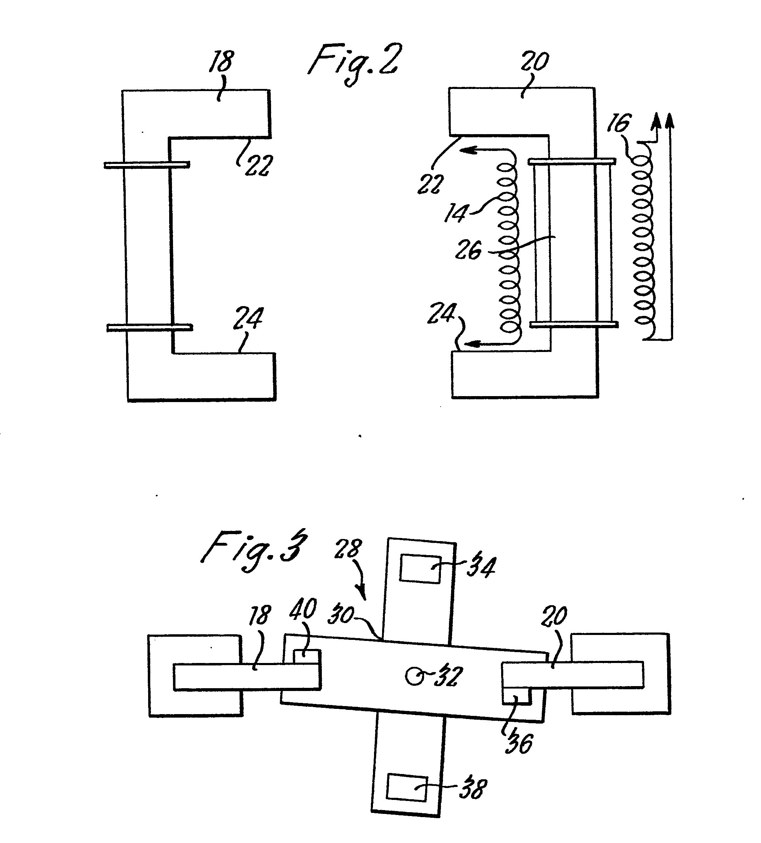

Referring to Figure 2, an electric motor includes two stator cores 18 and 20 each having two stator coils thereon. For clarity, only the stator coils 14 and 16 on the stator core 20 are shown. The stator cores 18 and 20 are diammetrically opposed and are spaced apart to receive the rotor (not shown) of the motor between them. The stator coils 14 and 16 are connected to the respective outputs of the power amplifiers 10 and 12 which are arranged so that in operation the coils 14 and 16 are energised alternately with pulses of opposite polarity to one another.

The rotor has mounted thereon four permanent magnets which are spaced apart at 90$^{\circ}$ to one another so that each rotor magnet is adjacent to and parallel to the stator coils 14 and 16 as it passes the stator cores 20 and 18.

The physical arrangement of the motor stator and rotor can be appreciated from a study of Figures 2, 3 and 4. The two stator cores 18 and 20 are of horseshoe configuration with the end faces 22 and 24 constituting the poles of each stator core. The two stator coils 14 and 16 are wound round the linear base 26 of each stator core, the two coils 14 are connected in parallel to the output of the power amplifier 10, and the two coils 16 are connected in parallel to the output of the power amplifier 12.

The rotor 28 comprises two brass cross-members 30 which are mounted on a rotor shaft 32. Four permanent magnets 34, 36, 38 and 40 are mounted at their opposite ends to the outer arm portions of the rotor cross-members so that as the rotor rotates the poles of each rotor magnet pass adjacent to respective poles of the two stator cores 18 and 20.

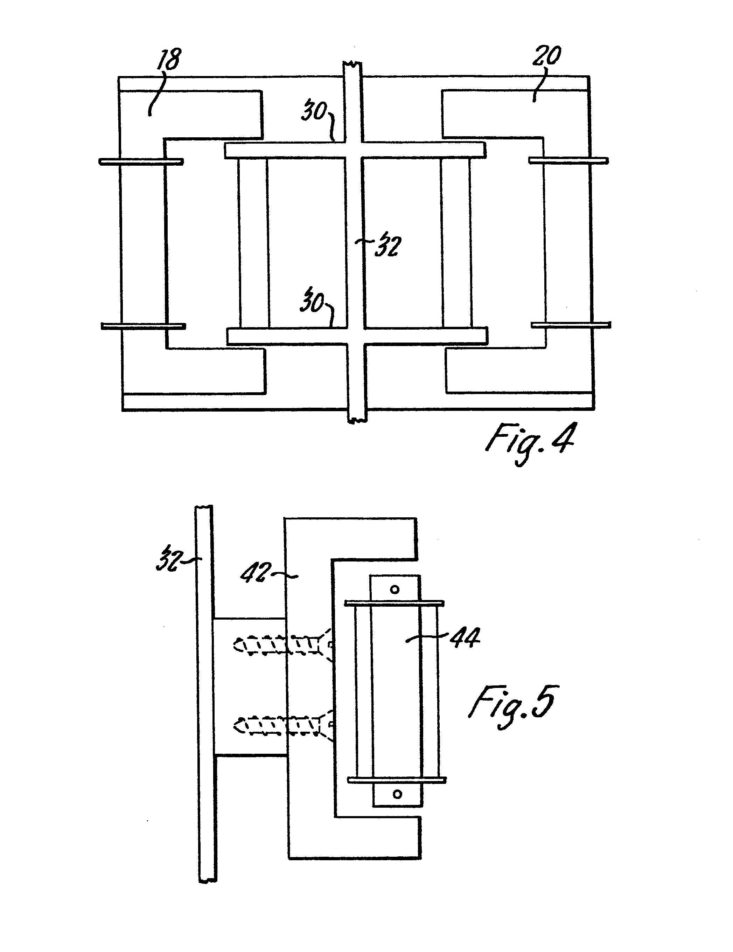

Referring particularly to Figure 3, the diammetrically opposed magnets 34 and 38 are of the same polarity as one another with their North poles illustrated, and the magnets 36 and 40 are of the same polarity as one another with their South poles illustrated.

When the stator coils 14 and 16 are not energised, the magnets 36 and 40 will be attracted to the adjacent stator cores 20 and 18 respectively.thereby rotating the rotor 28 to the position illustrated in Figure 3. When the pulse generator 2 is switched on a pulse is fed to each stator coil 14 thereby setting up a magnetic field in the stator cores 18 and 20. Assuming that this magnetic field repels the rotor magnets 36 and 40, then the rotor 28 will commence to rotate clockwise, and as the magnets 34 and 38 approach the stator coils 14 these magnets will be attracted to the stator cores 20 and 18 respectively. The pulse generator frequency is controlled so that when the rotor 28 has rotated through $90^{O}$ to bring the magnets 34 and 38 just past the stator cores 20 and 18 respectively, then the stator coil 14 are de-energised, and the stator coils 16 are energised,

0004138

thereby reversing the polarity of the magnetic field through the stator cores 18 and 20. In consequence, the stator cores 18' and 20 repel the rotor magnets 38 and 34 thereby continuing the clockwise rotation of the rotor 28, and attract the magnets 36 and 40 as they approach the stator cores 18 and 20. When the magnets 36 and 40 have just passed the stator cores 18 and 20, the stator cores 16 are de-energised, and the stator coils 14 are energised with a pulse of the initial polarity thereby continuing the clockwise rotation of the rotor 28.

It will be appreciated that this rotation of the rotor 28 is produced by the alternate energising of the stator coils 14 and 16 with pulses of opposite polarity to one another, and having a frequency such that each stator coil is energised as soon as an appropriate rotor magnet has just passed the stator core.

For simplicity, the above description has referred to only one pair of stator cores each having the two pulse energised stator coils wound thereon. In practice any number of similar stator cores can be included in the electric motor, and the greater the number of pulse energised coil mounting stator cores and rotor magnets the greater the uniformity of thrust applied to the rotor as it rotates. It is to be understood however that this invention includes within its scope an electric motor in which the pulse energised stator coils are mounted on only one stator core.

In the above described example, the stator coils 14 and 16 are each formed of 28 gauge enamelled copper wire and weigh approximately two ounces. Each stator core 18 and 20 is made of soft iron laminations which are bolted together.

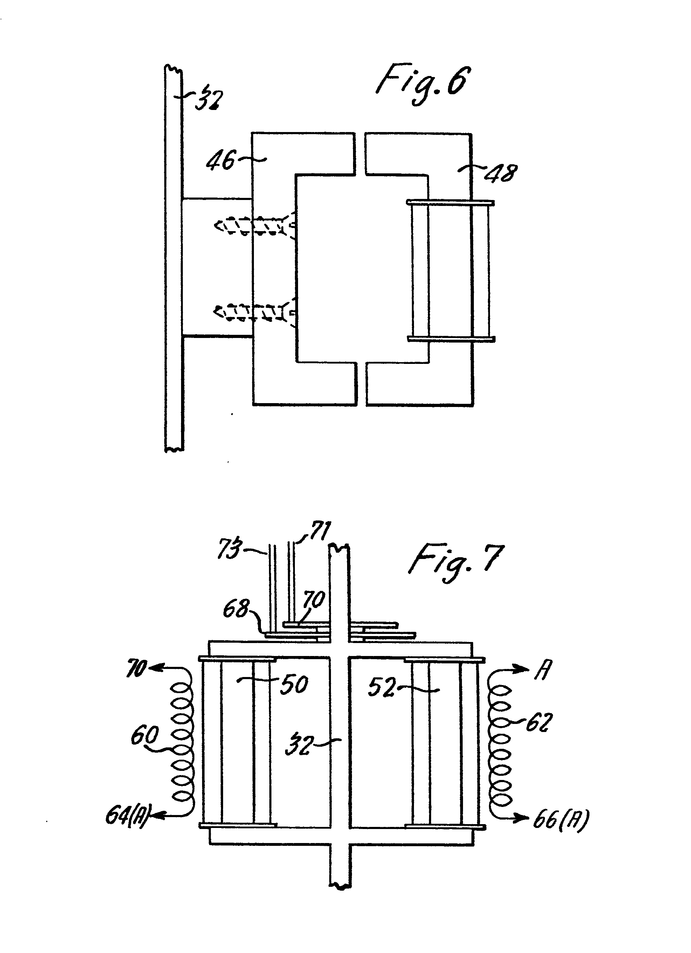

The stator and rotor magnets may have any suitable shape and configuration. For example, Figure 5 illustrates an electric motor in which each rotor magnet is a horseshoe permanent magnet 42 and each stator magnet is a bar electro-magnet 44. Figure 6 illustrates an electric motor in which each rotor magnet is a horseshoe permanent magnet 46, and each stator magnet is a horseshoe electro-magnet 48.

The circuit components of the multi-vibrator oscillator 4 and the power amplifiers 10 and 12 are as follows:-

| VR1 1K | TR5 2N457PNP | R5 1K |
|---|---|---|
| VR2 22K | VR5 10K | R6 5.6K |
| VR3 22K | VR6 10K | R7 330 OHMS |
| VR4 1K | C3 10MFD | R8 200 OHMS |
| C1 10MFD | C4 10MFD | R9 47 OHMS |
| C2 10MFD | C5 .0015 | S1 ⎫ |
| | C6 100MFD | S2 ⎭ Double Pole Switch |
| TR1 BD138PNP | C7 10MFD | D1 ⎫ |
| TR2 BD138PNP | R2 1K | D2 ⎭ Silicon Diodes |
| TR3 BC148NAN | R3 22 OHMS | VR7 1.5 MEG |
| TR4 BD135NPN | R4 68K | VR8 1.5 MEG |
| | | VR9 1K |

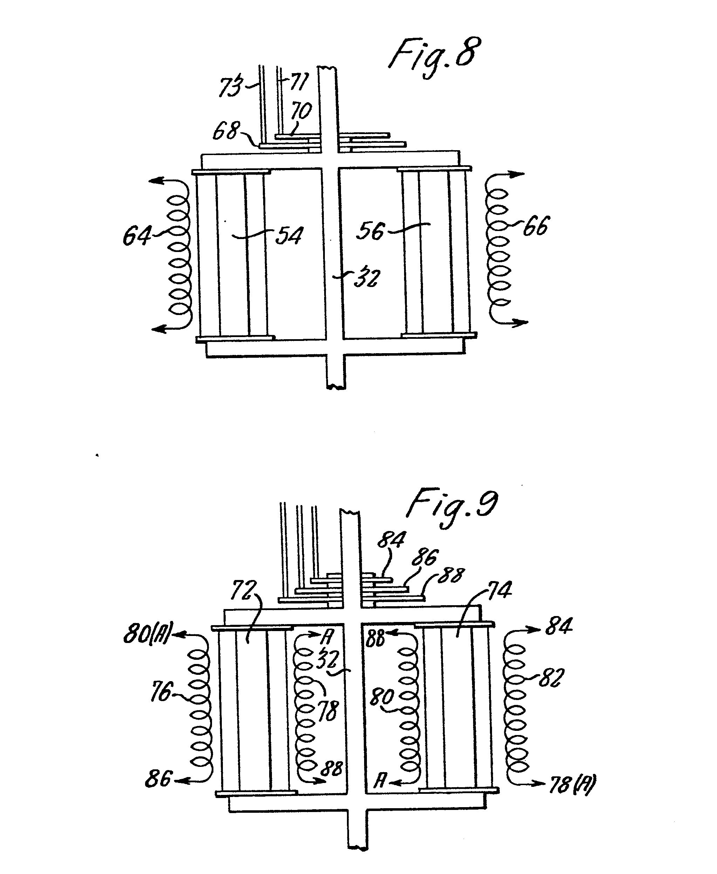

In the previously described and illustrated electric motors of the invention, the rotor has mounted thereon four permanent magnets. Figures 7 and 8 illustrate a rotor having four electro-magnets mounted on and electrically insulated from the rotor structure of Figures 2 to 4. The electro-magnets comprise magnetic cores 50, 52, 54 and 56, and wound thereon associated coils 60, 62, 64 and 66. Two slip rings 68 and 70 are mounted on and electrically insulated from the rotor shaft 32, and the coils are connected in series between these slip rings 68 and 70 as illustrated.

The slip rings 68 and 70 make electrical contact with positive and negative DC lines 71 and 73 coupled to a source of DC voltage (not shown). When the DC source is switched on, the energised coils 60 to 66, produce two mutually perpendicular pairs of magnets with the magnets in each pair of like polarity and of opposite polarity to the magnets of the other pair. It will be seen that these electro-magnets have the same configuration as the permanent magnets of Figure 3, and that the construction of Figures 7 and 8 does away with the need to use permanent magnets.

In the previously described and illustrated electric motors of the invention, two electrically separate coils have been wound round at least one stator core. In operation, these coils are energised alternately so as to produce electro-magnets of opposite polarity to one another thereby driving the motor.

The invention includes within its scope an electric motor in which two such coils are wound round at least one rotor core in order to drive the motor.

0004138

Figure 9 is a diagrammatic plan view of part of the rotor of an electric motor of the invention. Four rotor cores are mounted on and electrically insulated from a rotor constructed as in Figures 3 and 4. Figure 9 illustrates two such diametrically opposed rotor cores 72 and 74, and it will be appreciated that there are two further similar cores equally spaced between the cores 72 and 74. Electrically separate coils 76 and 78 are wound round the core 72, and similar electrically separate coils 80 and 82 are wound round the core 74. Three slip rings 84, 86 and 88 are mounted on and electrically insulated from the rotor shaft 32. The slip rings are electrically coupled to the outputs of the power amplifiers 10 and 12 and the negative line 90 respectively of Figure 1.

As will be seen from Figure 9, the coils 82 and 78 are connected in series between the slip rings 84 and 88 so that these coils 82 and 78 are connected in series across the output of the power amplifier 10. Similarly, the coils 76 and 80 are connected in series between the slip rings 86 and 88 so that these coils 76 and 80 are connected in series across the output of the power amplifier 12.

The coils of the two further rotor cores are connected in a similar manner across the output of the power amplifiers 10 and 12. The stator poles may form a part of permanent magnets, or alternatively they may be energised by electro-magnets as illustrated in Figures 2 and 3.

The operation of the rotor illustrated in Figure 9 is basically similar to the stator illustrated in Figure 2. The alternating magnetic fields of the rotor react with the magnetic fields of the stator to provide the required rotation of the rotor thereby driving the motor.

Those aforementioned rotors of the invention including permanent magnet rotors have the advantage that power is not induced into the rotors from the stator poles, thereby reducing power loss.

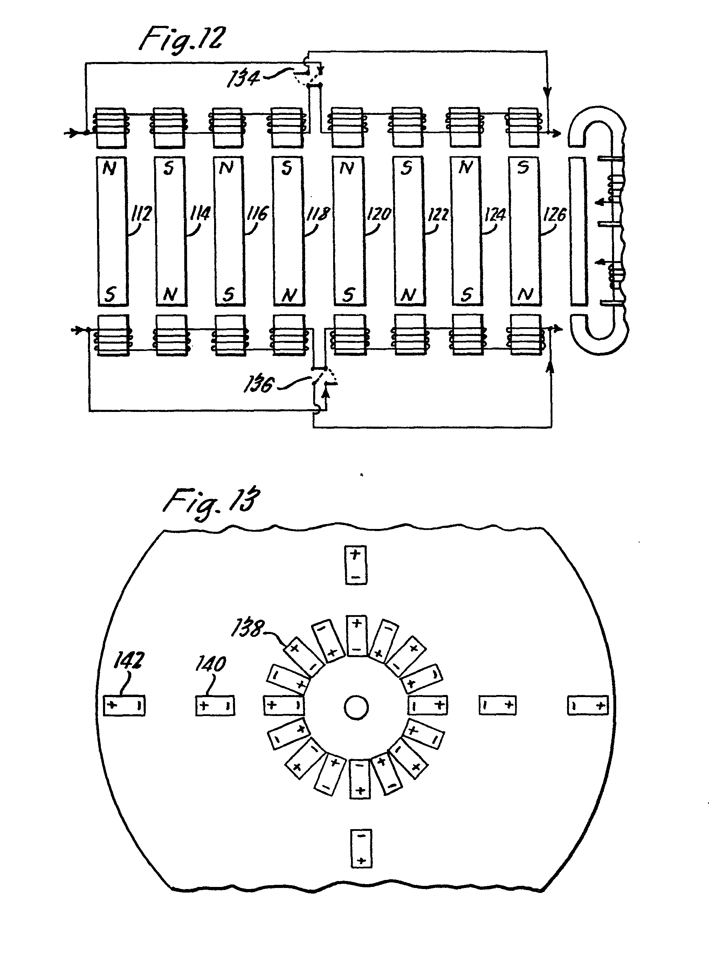

The impedence of the stator windings increases with the operational speed of the motor. However, this increase in impedence of the stator windings can be reduced by progressively switching from a series wound stator winding configuration to a parallel wound stator winding configuration as illustrated in Figure 12.

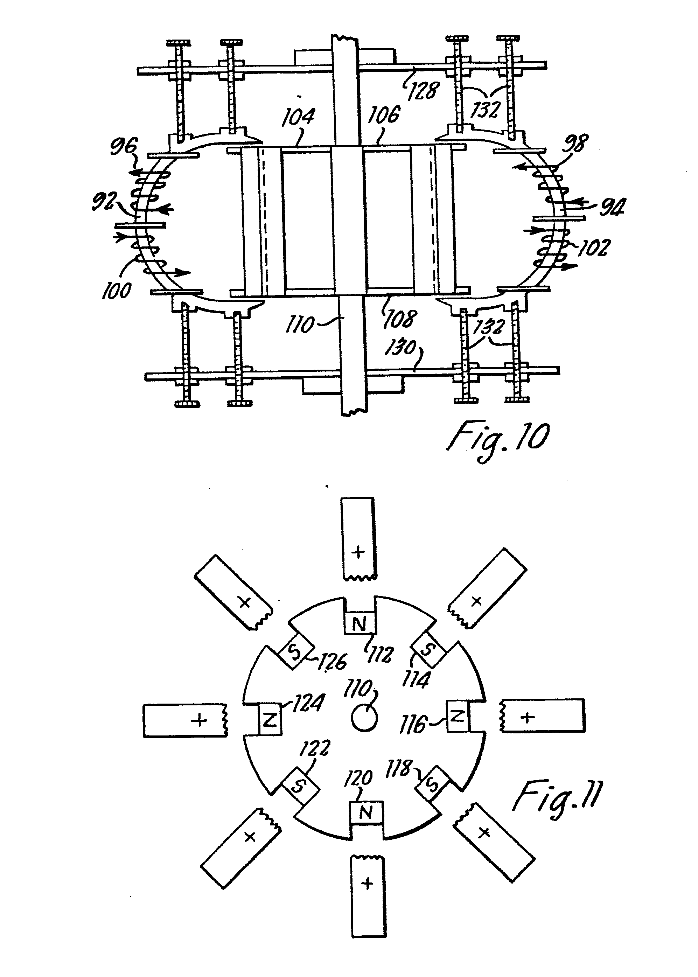

Referring to Figures 10, 11 and 12, a further electric motor of the invention includes eight stator cores of which two cores 92 and 94 are illustrated in Figure 10. Two stator coils are wound round each stator core; the coils 96 and 98 are connected in parallel to the output of the power amplifier 10, and the coils 100 and 102 are connected in parallel to the output of the power amplifier 12.

The rotor 104 includes two brass-end members 106 and 108 which are mounted on a rotor shaft 110. Eight permanent magnets 112 to 126 are mounted at their opposite ends to the outer portions of the rotor end members 106 and 108 so that as the rotor rotates the poles of each rotor magnet pass adjacent to respective poles of the eight stator cores.

Referring particularly to Figure 11 all diametrically opposed rotor magnets are of the same polarity as one another and adjacent magnets are of reverse polarity to one another.

The stator cores are secured to opposed casing plates 128 and 130 by elongate mounting screws 132 which enable each stator core to be adjusted relatively to these plates and to the rotor 104. The rotor shaft 110 is rotatably mounted in these casing plates 128 and 130 by suitable bearings.

As previously mentioned, in order to reduce the increase in the stator winding impedance with motor speed, it is desirable for the stator windings to be switched progressively from a series wound configuration to a parallel wound configuration. Referring to Figure 12, this stator winding configuration change can be carried out by means of the two double pole two way switches 134 and 136. As shown in Figure 12, eight stator coils are connected between the power amplifier 10 and the negative line 90 and eight stator coils are connected between the amplifier 12 and the negative line 90 illustrated in Figure 1. When these switches 134 and 136 are in the full line positions illustrated in Figure 12, eight stator coils are connected in series between a respective amplifier 10 and 12 and the negative line 90. When these switches 134 and 136 are switched to their dotted line positions, each group of eight stator coils is formed into two sub-groups of four coils, these sub-groups being in parallel with one another between the respective amplifier 10 and 12 and the negative line 90.

One way of producing sufficient power to drive the eight stator motor illustrated in Figures 10, 11 and 12, is by means of thyristors using capacitor turn-off techniques. The motor speed can be calculated by dividing the frequency of the current from the amplifiers 10 and 12 by the number of stators in the motor.

0004138

The motor illustrated in the Figures 10, 11 and 12 operates efficiently over a considerable range of speeds, and the torque can be varied by varying the voltage supply to the motor. This motor is a synchronous motor having a variable speed and a variable torque which can be operated economically from a DC source.

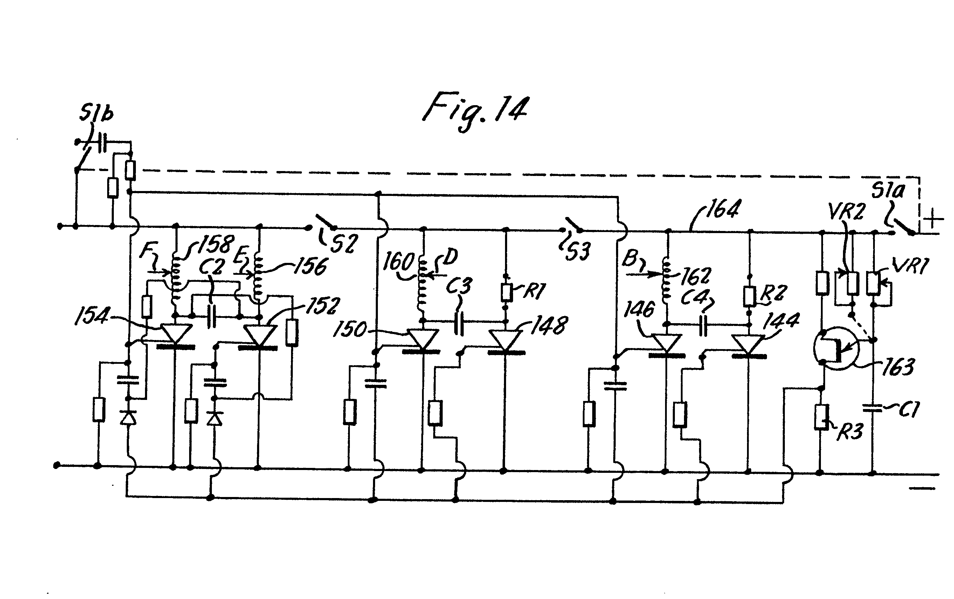

Referring to Figure 13, a further electric motor of the invention includes three coaxial rings of permanent magnets 138, 140 and 142 mounted on a rotor 139. Six stator cores 141, 143, 145, 147, 149 and 151 are mounted to the motor casing 153 along a diameter of the rotor magnet rings.

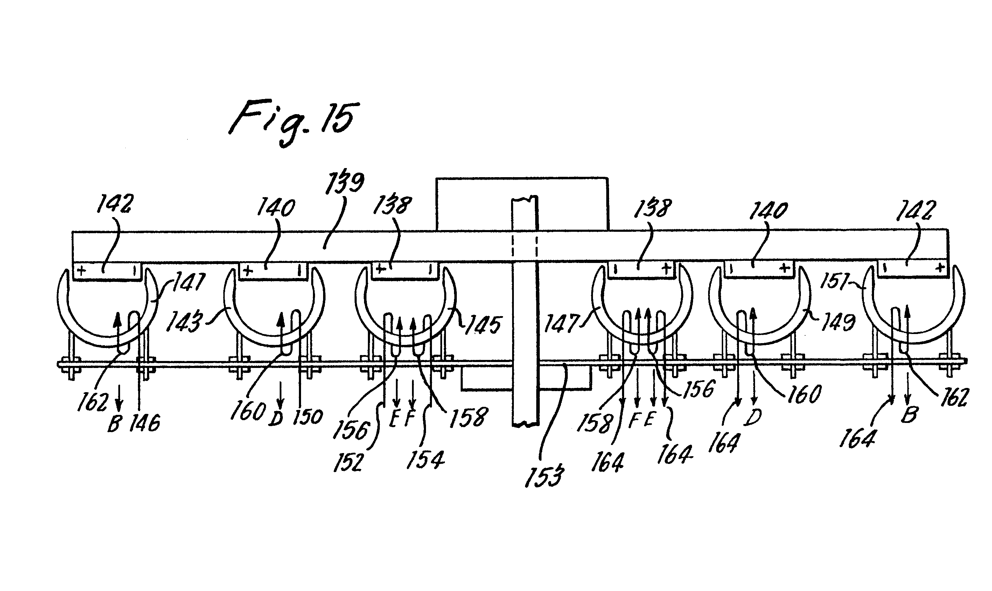

Figure 14 is a circuit diagram of a synchronous starter and a variable pulse generator for energising the stator cores of the motor of Figure 13. The starter and generator includes six silicon controlled rectifiers or thyristors 144 to 154, in which the thyristors 152 and 154 are connected to stator coils 156 and 158 on the inner magnet ring 138, thyristor 150 is connected to a stator coil 160 on the intermediate magnet ring 140, and thyristor 146 is connected to a stator coil 162 on the outer magnet ring 142. The pulse generator circuit includes switches S1a, and S2 and S3 in the positive voltage line 164, and a switch S1b which is ganged with switch S1a.

In operation, the pulse generator is adjusted to operate at a frequency of 16 cycles per second, and the switches S1a, S1b, 2 and 3 are closed. This causes a gate firing pulse to be passed to the thyristors 146, 150 and 154 which are thereby switched on to energise the stator coils 162, 160 and 158. After this initial firing pulse, the subsequent gate firing of the thyristors is carried out by the pulse generator which fires the thyristors at the desired frequency.

The frequency of the pulse generator is steadily increased to 64 pulses per second thereby increasing the rotor speed of the motor to 4 revolutions per second. The switch 52 is then opened to switch off the thyristors 152 and 154 thereby removing the motor drive from the inner magnet ring 138. The rotor continues to rotate due to the drive exerted by the intermediate magnet ring 140.

The pulse generator frequency is switched to 16 pulses per second to enable the intermediate magnet ring 140 to become synchronised. The pulse generator frequency is then increased to 64 pulses per second thereby increasing the rotor speed to 16 revolutions per second. The switch S3 is then opened to switch off the thyristors 148 and 150 thereby removing the drive from the intermediate magnet ring 140.

The pulse generator frequency is ~~again~~ switched to 32 pulses per second in order to synchronise the outer magnet ring 142, and the pulse generator frequency is increased to 64 pulses per second to increase the rotor speed to 32 revolutions per second.

The inner magnet ring 138 is operated on a push-pull system with two stator coils 156 and 158 connected to the thyristors 152 and 154, and the intermediate and outer magnet rings 140 and 142 are operated on a push system only in which only one stator coil 162 and 160 is connected to each thyristor set 144 and 146, and 148 and 150 respectively.

The layout of the permanent magnets in the three coaxial rings 138, 140 and 142 on the rotor 139 maintains the correct magnetic phasing to allow only one pulse generator to be used, and simplifies the drive circuit.

The Switching Operation of the Starter and Generator

Referring to Figures 13 to 15, firstly, the switches S2 and S3 of the starter and generator of Figure 14 are closed. Then the switches S1a and S1b are closed thereby feeding a firing pulse from the synchronous starter to the thyristors 154, 150 and 146. These three thyristors are thereby turned on and energise the coils 158 on the stator cores 145 and 147, the coil 160 on the stator cores 143 and 149, and the coil 162 on the stator cores 141 and 151.

The coils 158, 160 and 162 are each two separate coils which are mounted on different stator cores and connected to one another to make a single coil as illustrated in Figure 14.

When the thyristors 154, 150 and 146 are turned on, the thyristors 152, 148 and 144 are off. The synchronous starter circuit is arranged so that the starter ceases to operate after feeding a single firing pulse. This firing pulse is generated instantaneously by closure of the switches S1a and S1b. Closure of switch S1a causes the capacitor C1 to commence charging through the variable resistor VR1. When the voltage across the capacitor C1 has reached the firing potential of the uni-junction transistor 163, this transistor fires and discharges the capacitor C1 across the resistor R3.

This discharge causes the firing pulse to be fed to the gates of the thyristors 152, 150, 148, 146 and 144. The layout of the resistor and diode associated with the thyristor 154 prevents a pulse from reaching the gate of this thyristor 154.

The thyristors 150 and 146 are already switched on as previously described, and they ignore this later firing pulse. However, the thyristors 152, 148 and 144 are turned on by this firing pulse thereby causing the capacitors C2, C3 and C4 to change polarity which turns off the thyristors 154, 150 and 146. The resistors R1 and R2 connected between the positive voltage line 164 and the anode of the thyristors 148 and 144 prevent these two thyristors from self-latching, and these two thyristors 148 and 144 turn off leaving the thyristor 152 switched on and the coil 156 energised. As soon as the capacitor C1 has discharged, the uni-junction transistor 163 switches off thereby allowing the capacitor C1 to charge up again through the variable resistor VR1. When the voltage across the capacitor C1 has reached the firing potential of the transistor 163, a further firing pulse is fed to the thyristors 154, 150, 148, 146 and 144. These thyristors are thereby turned on to energise the coils 158, 160 and 162. The thyristor 152 is switched off by the change in polarity of the capacitor C2 caused by the thyristor 154 being switched on. This switching action deenergises the coil 156.

The resistors R1 and R2 prevent the thyristors 148, and 144 from self-latching, and these two thyristors turn off.

0004138

The thyristor 152 does not receive a pulse because of the resistor and diode layout of the circuit.

The aforementioned circuit action continues thereby energising alternately the stator coils so as to rotate the rotor 139 of the electric motor. If a fixed resistor is used to charge the capacitor C1, then the pulse generator of Figure 14 will operate at a stable frequency so as to rotate the rotor 139 at a constant frequency. By using the variable resistor VR1 to charge the capacitor C1, it is possible to feed a firing pulse to the switching circuit at a desired one of a number of different frequencies thereby correspondingly varying the rotational speed of the rotor 139.

The circuit of Figure 14 includes two variable resistors VR1 and VR2 either of which can be connected between the positive voltage line 164 and the transistor 163 by means of the switch S4. The transistor 163 is switched between the variable resistors VR1 and VR2 by the switch S4 so as to switch the pulse generator frequency instantaneously from 64 pulses per second to 16 pulses per second as previously described herein.

An important feature of the motor of Figures 13 and 14, is that the pulses required to drive the amplifiers 10 and 12 or to fire the gates of the thyristors 144 to 154 could be pre-recorded on magnetic tape. This tape could then be replayed when it is required to operate the motor in either a single or a variable speed mode. This would remove the need to couple a motor directly to a multi-vibrator or a uni-junction transistor pulse generator, and would make the motor programmable.

CLAIMS

1.    A pulse operated electric motor comprising a stator, a rotor mounted for rotation with respect to the stator and at least one magnet mounted on each of the rotor and stator, in which either the stator magnet or the rotor magnet comprises either one coil or two electrically separate coils.

2.    A motor as claimed in Claim 1, including at least one pair of diammetrically opposed stator magnets.

3.    A motor as claimed in Claim 1 or Claim 2 in which the rotor magnet is an electro-magnet.

4.    A motor as claimed in Claim 3, including two pairs of diammetrically opposed rotor electro-magnets mounted at 90° to one another with the electro-magnet coils connected in series with one another whereby the electro-magnets in each pair are of the same polarity as one another and of opposite polarity to the electro-magnets in the other pair.

5.    A motor as claimed in Claim 3, including two diammetrically opposed rotor electro-magnets in which each rotor electro-magnet comprises two electrically separate coils, and in which corresponding coils in the two electro-magnets are connected in series with one another.

6.    A motor as claimed in Claim 5, including two pairs of diammetrically opposed rotor electro-magnets mounted at 90° to one another in which each rotor electro-magnet comprises two electrically separate coils, and in which corresponding coils in the two electro-magnets of each pair are connected in series with one another.

7.    A motor as claimed in Claim 1, including a plurality of stator electro-magnets in which the corresponding stator coils can be switched from a series configuration to a parallel configuration.

8.     A motor as claimed in Claim 7, including eight stator electro-magnets in which each group of eight corresponding stator coils can be switched from a series combination to a combination of two sub-groups in parallel with one another with each sub-group comprising four coils in series.

9.     A motor as claimed in Claim 1, comprising a plurality of coaxial rings of rotor magnets of different diameters to one another and stators associated with each ring which are arranged so that in operation the drive to the stators can be deenergised in sequence from the stators associated with the inner ring outwards.

10.     A motor as claimed in Claim 1, including two rotor magnets mounted $180^{\circ}$ apart and a single stator magnet, in which the rotor magnets are arranged to be of opposite polarity to one another whereby they are sequentially attracted and repelled by the stator magnet to drive the motor.

Fig.1

Fig.2

18    20    16

22    22

14

26

24    24

Fig.3    28    34

18    40    30    20

32

36

38

Fig.4

Fig.5

*Fig.6*

*Fig.7*

Fig.8

Fig.9

Fig.10

Fig.11

*Fig.12*

*134*

N S N S N S N S
*112* *114* *116* *118* *120* *122* *124* *126*
S N S N S N S N

*136*

*Fig.13*

+
−

*138*

*142* *140*

+ − + − + +

−
−

Fig.14

Fig. 15

# EUROPEAN SEARCH REPORT

European Patent Office

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | US - A - 3 124 733 (ANDREWS) <br><br> * Column 1, lines 11-17; column 2, lines 25-67; column 3, lines 1-22; column 4, lines 33-72; column 7, lines 23-31; figures 1-8 * <br><br> -- | 1-6 | H 02 K 21/00 <br> 29/00 |
| | FR - A - 2 275 054 (VINOT) <br><br> * Page 2, lines 8-40; page 3, lines 1-40; page 4, lines 1-4; figures 1-3 * <br><br> -- | 1-3 | |
| | US - A - 2 408 375 (COLLINS) <br><br> * Column 1, lines 49-55; column 2, lines 1-55; column 3, lines 1-54; figures 1-6 * <br><br> -- | 1-4 | **TECHNICAL FIELDS SEARCHED (Int.Cl.²)** <br><br> H 02 K 29/00 <br> 29/02 <br> 29/04 <br> 21/00 <br> 21/12 <br> 21/14 <br> 21/18 <br> 21/24 |
| | US - A - 1 863 294 (BOGIA) <br><br> * Page 1, lines 84-100; page 2, lines 1-130; page 3, lines 1-130; page 4, lines 1-26; figures I-X * <br><br> -- | 1-3,7, 8 | 21/26 <br> 21/28 <br> 21/32 <br> 21/34 <br> 25/00 |
| | FR - A - 2 172 344 (GENERAL TIME) <br><br> * Page 3, lines 38 and 39; page 4, lines 1-39; page 5, lines 1-28; figures 1-3 * <br><br> -- | 1,10 | **CATEGORY OF CITED DOCUMENTS** <br><br> X: particularly relevant <br> A: technological background <br> O: non-written disclosure <br> P: intermediate document <br> T: theory or principle underlying the invention |
| | FR - A - 2 061 981 (JAEGER) <br><br> * Page 1, lines 36-41; page 2, lines 1-41; page 3, lines 1-35; page 5, lines 16-36; figures 2,3,5-8,10,11,14-17 * | 1,10 | E: conflicting application <br> D: document cited in the application <br> L: citation for other reasons |

The present search report has been drawn up for all claims

&: member of the same patent family, corresponding document

| Place of search | Date of completion of the search | Examiner |
|---|---|---|
| The Hague | 03-05-1979 | TIO |

European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - E - 33 907 (THOMSON-HOUSTON) <br> * Page 1, lines 36-52; page 2, lines 1-79; figure * <br><br> ---- | 2-6 | |
| | | | **TECHNICAL FIELDS SEARCHED (Int. Cl.³)** |

EPO Form 1503.2  06.78